# EUROPÄISCHE PATENTSCHRIFT

(11) **EP 2 917 621 B1**
(45) Veröffentlichungstag und Bekanntmachung des Hinweises auf die Patenterteilung: **21.03.2018**
(21) Anmeldenummer: 13791961.9
(22) Anmeldetag: 07.11.2013
(51) Int. Cl.: F16K 11/074, F16K 3/08

(54) **SCHEIBENVENTIL**
DISC VALVE
SOUPAPE À DISQUE

(30) Priorität: 07.11.2012 DE 102012022211
(43) Veröffentlichungstag der Anmeldung: 16.09.2015
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2013/073223
(87) Internationale Veröffentlichungsnummer: WO 2014/072378

(56) Entgegenhaltungen:
- EP-A1- 2 151 613
- WO-A1-01/06156
- DE-A1- 4 427 745
- DE-T1- 3 890 735

## Beschreibung

Die Erfindung betrifft ein Scheibenventil, insbesondere ein Mehrwege-Regulierventil, mit einem Gehäuse, das als Anschlüsse für ein flüssiges und/oder gasförmiges Medium zumindest einen Zulaufanschluss zum zumindest einen Ablaufanschluss aufweist, mit mindestens einer verdrehbar gelagerten Ventilscheibe, insbesondere Keramikventilscheibe, die mit wenigstens einer ersten Durchströmungsöffnung versehen und drehbar gelagert in dem Gehäuse angeordnet ist, um in Abhängigkeit ihrer Drehstellung die Anschlüsse fluidtechnisch miteinander zu verbinden und voneinander zu trennen, wobei die Ventilscheibe auf einer drehfest angeordneten und mindestens zwei zweite Durchströmungsöffnungen aufweisenden Dichtscheibe, insbesondere Keramikdichtscheibe, zumindest flächig aufliegt, und mit einem zwischen der Dichtscheibe und einem Zwischenboden des Gehäuses angeordneten und elastisch verformbaren Dichtelement, wobei das Dichtelement scheibenförmig ausgebildet ist und mit den zweiten Durchströmungsöffnungen fluchtende dritte Durchströmungsöffnungen aufweist.

Scheibenventile der eingangs genannten Art sind aus dem Stand der Technik bekannt und werden beispielsweise in Kraftfahrzeugen zur Regulierung von Kühlwasserkreisläufen oder auch in Getränkeautomaten eingesetzt. Aus der DE 10 2008 041 122 A1 ist beispielsweise ein gattungsgemäßes Scheibenventil bekannt, bei welchem ein zwischen Dichtscheibe und Gehäuse angeordnetes Dichtelement vorgesehen ist. Zur Verdrehsicherung des Dichtelementes ist dieses mit einer im Wesentlichen quadratischen Außenkontur versehen, während das das Dichtelement aufnehmende Gehäuse einen kreisförmigen Querschnitt aufweist, wobei in die durch die unterschiedlichen Konturen bedingten seitlichen Freiräume zwischen Dichtelement und Gehäusewand Radialvorsprünge hineinragen, die ein Verdrehen der Dichtscheibe verhindern. Damit wird zwar eine sichere Verdrehsicherung des Dichtelements gewährleistet, jedoch ergeben sich hierdurch Beschränkungen in Bezug auf den jeweils maximal einstellbaren Durchströmungsquerschnitt des Scheibenventils.

Aus der Offenlegungsschrift EP 2 151 613 A, die die Priorität der vorgenannten DE 10 2008 041 122 A1 beansprucht, ist bereits ein Scheibenventil mit den Merkmalen des Oberbegriffs des Anspruchs 1 bekannt. Aus der Offenlegungsschrift DE 38 90 735 T1 ist außerdem ein Mischhahn bekannt, der eine verlagerbare Dichtscheibe, sowie eine feste Dichtscheibe aufweist, wobei die festgelegte Dichtscheibe unter Zwischenschaltung eines Dichtelements auf einem Zwischenboden aufliegt. Das Dichtelement ist dabei in einer Nut des Zwischenbodens verdrehsicher angeordnet.

Der Erfindung liegt somit die Aufgabe zugrunde, ein Scheibenventil zu schaffen, das auf einfache und kostengünstige Art und Weise eine Verdrehsicherung für das Dichtelement gewährleistet und gleichzeitig eine optimale Ausnutzung des Bauraums für ein maximal großen Durchströmungsquerschnitt bietet.

Die der Erfindung zugrunde liegende Aufgabe wird durch ein Scheibenventil mit den Merkmalen des Anspruchs 1 gelöst. Dadurch, dass erfindungsgemäß die für die Verdrehsicherung notwendigen Bestandteile des Scheibenventils nach innen in den Bereich der dritten Durchströmungsöffnungen verlagert wird, kann der Querschnitt beziehungsweise der Innenraum des Gehäuses optimal in Bezug auf größtmögliche Durchströmungsquerschnitte ausgelegt werden. Erfindungsgemäß ist hierzu vorgesehen, dass der Zwischenboden zur formschlüssigen Verdrehsicherung des Dichtelements wenigstens einen in eine der dritten Durchströmungsöffnungen eingreifenden Haltevorsprung aufweist. Hierbei wird ausgenutzt, dass die Durchströmungsöffnungen selbst bereits einen Drehanschlag darstellen, der von dem jeweiligen Haltevorsprung ausgenutzt wird. Die Außenkontur kann somit an die Innenkontur des Gehäuses optimal angepasst werden, wodurch die Fläche des Dichtelements insgesamt vergrößert und damit die mögliche Größe der Durchströmungsöffnungen maximiert wird. Durch das Vorsehen des Haltevorsprungs im Bereich der Durchströmungsöffnungen wird darüber hinaus die Gestaltung der Gehäusewand des Gehäuses vereinfacht, was zu Vorteilen bei der Herstellung und letztendlich auch bei der Haltbarkeit des Scheibenventils führt.

Vorzugsweise ist vorgesehen, dass in jeder der dritten Durchströmungsöffnungen des Dichtelements mindestens ein Haltevorsprung eingreift. Hierdurch wird verhindert, dass aufgrund der Verformbarkeit des elastischen Dichtelements dieses bereichsweise aus seiner Position heraus verschoben und dadurch die Dichtwirkung des Dichtelements verringert wird. Durch Vorsehen jeweils eines Haltevorsprungs in jeweils einer der dritten Durchströmungsöffnungen werden zumindest die dritten Durchströmungsöffnungen im Wesentlichen an Ort und Stelle gehalten, sodass auch eine den Durchströmungsquerschnitt verringernde Verformung sicher verhindert wird.

Gemäß einer vorteilhaften Weiterbildung der Erfindung ist vorgesehen, dass sich der jeweilige Haltevorsprung als Haltesteg über den gesamten Innenumfang der jeweiligen dritten Durchströmungsöffnung erstreckt. Die Kontur des insofern ringförmigen Haltestegs entspricht daher der Kontur der jeweiligen dritten Durchströmungsöffnung, sodass das Dichtelement im Bereich der jeweiligen dritten Durchströmungsöffnung jeweils seitlich an dem Haltesteg anliegt. Durch eine entsprechende Toleranzwahl wird bevorzugt erreicht, dass das Dichtelement stets vorgespannt gegen den jeweiligen Haltesteg gepresst ist, um die Dichtwirkung im Bereich des Haltestegs zu optimieren. Der Haltesteg gewährleistet, dass sich die Kontur der jeweiligen dritten Durchströmungsöffnung des Dichtelements im Betrieb nicht verändern kann.

Gemäß einer vorteilhaften Weiterbildung der Erfindung ist vorgesehen, dass die zweiten und/oder dritten Durchströmungsöffnungen zumindest im Wesentlichen kreissegmentförmig ausgebildet sind. Hierdurch ergibt sich eine optimale Ausnutzung des zur Verfügung stehenden, üblicherweise kreisförmigen Raumes des Scheibenventils. Insbesondere durch eine zusätzlich kreissegmentförmige Anordnung der Strömungsöffnungen lässt sich der zur Verfügung stehende Bauraum optimal für maximal mögliche Durchströmungsquerschnitte ausnutzen. Zweckmäßigerweise sind sowohl die zweiten als auch die dritten Durchströmungsöffnungen jeweils kreissegmentförmig ausgebildet. Besonders bevorzugt weisen das Dichtelement und/oder die Dichtscheibe jeweils einen kreissegmentförmigen Bereich auf, der durchströmungsöffnungsfrei ausgebildet ist.

Vorzugsweise weist die Dichtscheibe zwei der zweiten Durchströmungsöffnungen auf, die sich insbesondere jeweils über mindestens ein Drittel der kreisförmigen Dichtscheibe erstrecken. Dadurch verbleibt etwa ein Drittel der Dichtscheibe als durchströmungsöffnungsfreier Bereich. Bevorzugt entspricht die Kontur des Dichtelements zumindest im Wesentlichen der Kontur der Dichtscheibe. Das Dichtelement weist entsprechend zwei dritte Durchströmungsöffnungen auf. Vorzugsweise sind die dritten Durchströmungsöffnungen entsprechend den zweiten Durchströmungsöffnungen ausgebildet und angeordnet. Besonders bevorzugt sind die dritten Durchströmungsöffnungen etwas größer ausgebildet als die zweiten Durchströmungsöffnungen, um vorteilhafte Strömungsbedingungen zu erreichen.

Besonders bevorzugt ist die Außenkontur der Dichtscheibe, des Dichtelements und des Zwischenbodens jeweils kreisförmig ausgebildet. Durch die kreisförmige Ausbildung ergibt sich eine optimale Ausnutzung des zur Verfügung stehenden Bauraums. Bei der Ventilscheibe ist hingegen eine kreisförmige Außenkontur nicht unbedingt von Vorteil. Hier wird eine kreissegmentförmige Außenkontur bevorzugt, wodurch die Herstellung der Ventilscheibe vereinfacht und Materialkosten verringert werden. Die kreisförmige Ausbildung von Dichtelement, Dichtscheibe und Zwischenboden gewährleistet einen sich am Außenrandbereich über den gesamten Umfang erstreckenden ringförmigen beziehungsweise kreisringförmigen Dichtbereich, der die Dichtheit des Scheibenventils gewährleistet.

Erfindungsgemäß ist vorgesehen, dass die Verdrehsicherung mindestens einen auf dem Zwischenboden angeordneten Axialvorsprung aufweist, der einen Durchbruch des Dichtelements zumindest im Wesentlichen formschlüssig durchgreift und bereichsweise in einer Aufnahmevertiefung der Dichtscheibe zu deren Verdrehsicherung einliegt. Bei dem Axialvorsprung kann es sich auch um einen der Haltevorsprünge handelt, der durch die jeweilige dritte Durchströmungsöffnung hindurch über das Dichtelement hinaus bis in eine entsprechende zweite Durch strömungsöffnung der Dichtscheibe hineinragt. Dies bedarf bei der Herstellung jedoch einer besonders hohen Toleranzgenauigkeit. Der Axialvorsprung wird gesondert von den Haltevorsprüngen in dem durchströmungsöffnungsfreien Bereich angeordnet. Die Dichtscheibe weist dabei eine insbesondere wannenförmige Aufnahmevertiefung auf, die mit dem Durchbruch des Dichtelements fluchtet, sodass der Axialvorsprung durch den Durchbruch in die Aufnahmevertiefung ragt. Dabei sind die Querschnitte von Axialvorsprung, Durchbruch von Aufnahmevertiefung derart gewählt, dass der Axialvorsprung jeweils formschlüssig in Durchbruch und Aufnahmevertiefung einliegt, um zumindest für die Dichtscheibe eine zumindest im Wesentlichen spielfreie Verdrehsicherung zu bilden.

Bevorzugt ist vorgesehen, dass der Zwischenboden des Gehäuses mit den zweiten und dritten Durchströmungsöffnungen fluchtende vierte Durchströmungsöffnungen aufweist, die jeweils einem der Anschlüsse zugeordnet sind. Besonders bevorzugt entspricht die Kontur des Zwischenbodens zumindest im Wesentlichen der Kontur des Dichtelements, sodass dieses vollständig auf dem Zwischenboden flächig aufliegt und durch den oder die Haltestege verdrehsicher daran gehalten ist. Da dann auch die vierten der Durchströmungsöffnung zumindest im Wesentlichen den gleichen Durchströmungsquerschnitt wie die dritten und zweiten Durchströmungsöffnungen aufweisen, ist ein entsprechend großer Volumenstrom durch das Scheibenventil gewährleistet. Je nach Drehstellung der Ventilscheibe wird der Volumenstrom dabei durch die eine und/oder andere zweite, dritte beziehungsweise vierte Durchströmungsöffnung geleitet, um zu dem einen oder den anderen Anschluss zu gelangen. Zweckmäßigerweise bilden die Durchströmungsöffnungen Kammern oder münden in Kammern, die dem jeweiligen Anschluss zugeordnet sind.

Besonders bevorzugt weist das Gehäuse wenigstens eine Trennwand auf, die das Gehäuse in die zwei Kammern aufteilt, und die an ihrer freien Stirnseite den Zwischenboden bildet oder mitbildet. Die Trennwand dient somit auch als Auflagefläche für das Dichtelement. Insgesamt weist das Scheibenventil somit mindestens drei Kammern auf, wobei zwei erste Kammern auf einer Seite von Dichtelement, Dichtscheibe und Ventilscheibe liegen, und zumindest eine zweite, auf der anderen Seite. So ist es bevorzugt vorgesehen, dass der Zulaufanschluss der mindestens einen zweiten, und die Ablaufanschlüsse jeweils der ersten und insbesondere der zweiten Kammer zugeordnet sind.

Vorzugsweise wird zumindest ein Abschnitt des Zwischenbodens durch eine Stufe in einer Gehäusewand des Gehäuses gebildet. Die Stufe wird zweckmäßigerweise durch eine Querschnittsverjüngung des Gehäuses gebildet. Die Stufe ist entsprechend der Gehäusewandform des Gehäuses bevorzugt kreisringförmig ausgebildet und stützt somit das Dichtelement voll umfänglich ab.

Vorzugsweise ist das Dichtelement aus einem Elastomer, insbesondere aus einem thermopolymeren Elastomer, insbesondere Kautschuk, gefertigt. Dadurch ergibt sich für das Scheibenventil eine hohe Lebensdauer mit einer sicher gewährleisteten Dichtwirkung.

Weiterhin ist bevorzugt vorgesehen, dass eine Steuerwelle drehfest mit der Ventilscheibe verbunden ist und mindestens einen radial vorstehenden Stützvorsprung axial beabstandet zu der Ventilscheibe aufweist, wobei zwischen dem Stützvorsprung und der Ventilscheibe wenigstens ein Federelement vorgespannt/vorspannbar gehalten ist. Die Steuerwelle selbst stützt sich zweckmäßigerweise axial an dem Gehäuse ab, sodass durch die Federvorspannung die Ventilscheibe gegen die Dichtscheibe, die Dichtscheibe gegen das Dichtelement und das Dichtelement gegen das Gehäuse gespannt wird, wodurch insgesamt die Dichtwirkung des Scheibenventils gewährleistet wird.

Im Folgenden soll die Erfindung anhand der Zeichnung näher erläutert werden. Dazu zeigen:
- Figur 1: ein Scheibenventil in einer perspektivischen Darstellung,
- Figur 2: das Scheibenventil in einer Längsschnittdarstellung,
- Figur 3: das Scheibenventil in einer Querschnittsdarstellung,
- Figuren 4A und 4B: eine Dichtscheibe des Scheibenventils in unterschiedlichen perspektivischen Darstellungen,
- Figur 5: eine mit der Dichtscheibe zusammenwirkende Ventilscheibe in einer perspektivischen Darstellung,
- Figur 6: eine Vormontagebaugruppe des Scheibenventils in einer perspektivischen Darstellung,
- Figuren 7A und 7B: eine Verdrehsicherung des Scheibenventils in unterschiedlichen Darstellungen,
- Figur 8: eine Arretiervorrichtung der Vormontagebaugruppe,
- Figur 9: einen Deckel des Scheibenventils in einer perspektivischen Darstellung,
- Figur 10: ein Verteilergehäuse des Scheibenventils mit einem Dichtelement in einer Schnittdarstellung und
- Figur 11: das mit der Dichtscheibe zusammenwirkende Dichtelement in einer perspektivischen Darstellung.

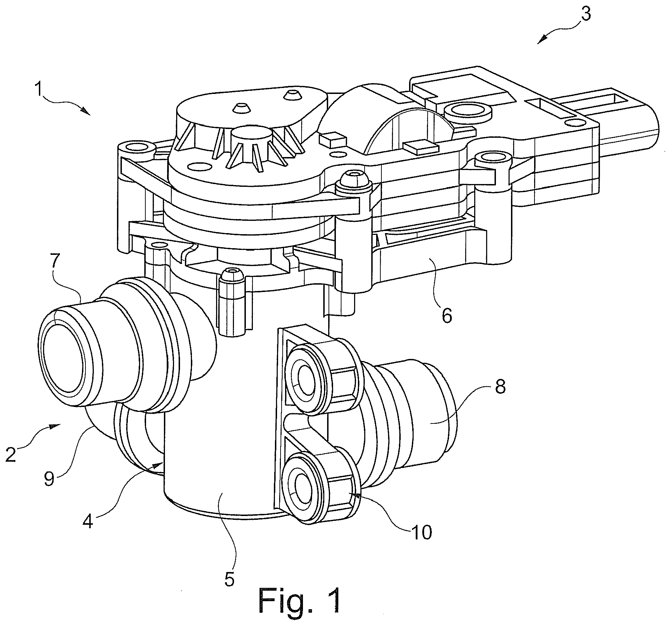

Figur 1 zeigt eine Ventileinrichtung 1, die ein Scheibenventil 2 sowie einen Stellantrieb 3 aufweist, in einer perspektivischen Darstellung.

Das Scheibenventil 2 weist ein Gehäuse 4 auf, welches von einem Verteilergehäuse 5 und einem Deckel 6 gebildet wird. Das Verteilergehäuse 5 weist drei Anschlüsse auf, von denen einer als Zulaufanschluss 7, und die beiden anderen als Ablaufanschlüsse 8 beziehungsweise 9 ausgebildet sind. Außerdem weist das Verteilergehäuse 5 eine Haltevorrichtung 10 zum Befestigen der Ventileinrichtung 1, beispielsweise an einer Karosserie eines Kraftfahrzeugs, auf.

An dem Deckel ist der Stellantrieb 3 montiert, der insbesondere als elektromotorischer Stellantrieb 3 ausgebildet ist und hierzu einen nicht näher dargestellten Elektromotor sowie ein Getriebe aufweist, das mit einer Steuerwelle des Scheibenventils 2 koppelbar ist, um ein an dem Zulaufanschluss 7 bereitgestelltes Medium auf die Ablaufanschlüsse 8, 9 wunschgemäß zu verteilen.

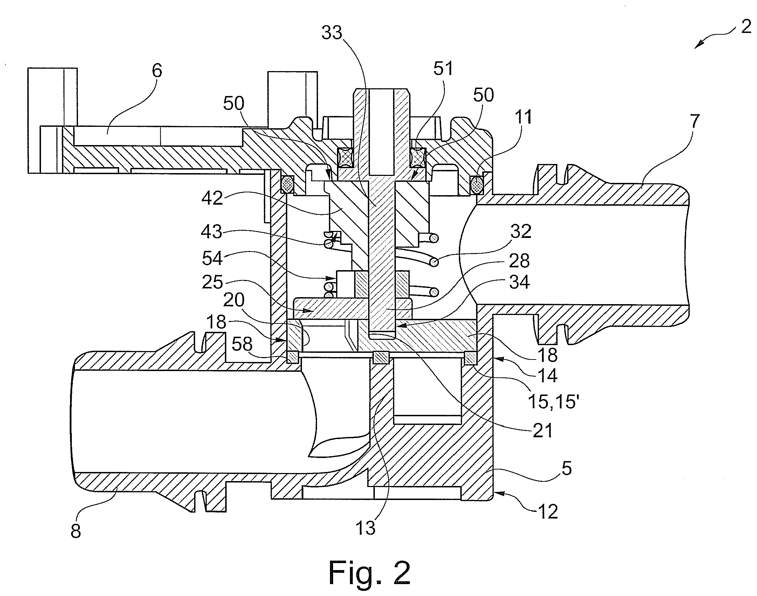

Figur 2 zeigt hierzu das Scheibenventil 2 in einer Längsschnittdarstellung. Das Verteilergehäuse 5 ist im Wesentlichen becherförmig ausgebildet, so dass es im Längsschnitt gesehen eine U-förmige Grundform aufweist. Die Anschlüsse 7, 8, 9 sind vorliegend einstückig mit dem Verteilergehäuse 5 ausgebildet. Der Deckel 6 verschließt das offene Ende des Verteilergehäuses 5, wobei zwischen Deckel 6 und Verteilergehäuse 5 zusätzlich ein Dichtungselement 11, das vorliegend als O-Ring ausgebildet ist, vorgesehen ist. Der Zulaufanschluss 7 mündet - axial gesehen - oberhalb des Ablaufanschluss 8 in das Verteilergehäuse 5, also nahe zu dem Deckel 6. Von dem dem Deckel 6 gegenüberliegenden Boden 12 des Verteilergehäuses 5 geht eine Trennwand 13 aus, die sich parallel zur Längserstreckung des Verteilergehäuses 5 beziehungsweise axial erstreckt und oberhalb des Anschlusses 8 einen Zwischenboden 14 mit ihrer freien Stirnseite bildend endet.

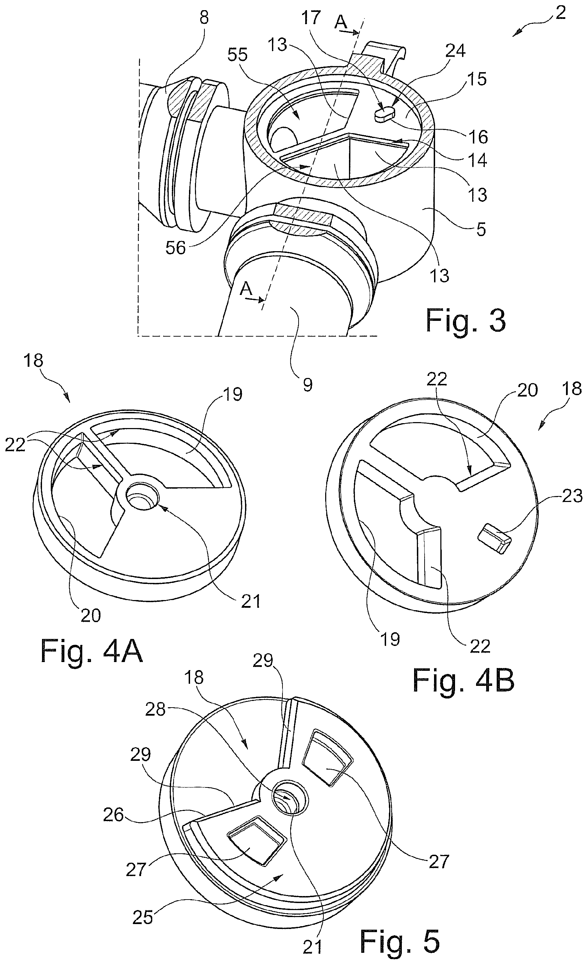

Figur 3 zeigt hierzu in einer Querschnittdarstellung des Scheibenventils 2 eine Draufsicht auf den Zwischenboden 14 beziehungsweise auf das Verteilergehäuse 5 oberhalb der Ablaufanschlüsse 8 und 9. Die Trennwand 13 bildet zwei Kammern 55, 56 in dem Verteilergehäuse 5, in welche jeweils einer der Ablaufanschlüsse 8, 9 mündet. Die Kammern 55 und 56 machen dabei etwa zwei Drittel des Verteilergehäuses 5 aus, während ein verbleibendes Drittel von dem Zwischenboden 14 durchströmungsöffnungsfrei gebildet wird. Hierzu weist die Trennwand 13 einendig einen kreissegmentförmig verbreiterten Bereich auf. Der Zwischenboden 14 erstreckt sich zum Teil stegförmig entlang der Innenseite der Gehäusewand des Verteilergehäuses 5 über den gesamten Umfang des Verteilergehäuses 5, um eine durchgehende Auflagefläche zu bilden. Der stegförmige Abschnitt wird vor einer Stufe 58 im Verteilergehäuse 5 gebildet, die durch eine Querschnittsverjüngung realisiert ist, wie insbesondere in Figur 2 gezeigt. Ergänzt wird er durch die freie Stirnseite der Trennwand 13. Die Kammern 55 und 56 erstrecken sich somit im Wesentlichen jeweils über ungefähr 120° des kreisförmigen Verteilergehäuses 5, während ein Großteil des Zwischenbodens 14 von den verbleibenden 120° durch die Trennwand 13 gebildet wird. Auf dem Zwischenboden 14 liegt ein Dichtelement 15 auf, das als Profildichtung 15' ausgebildet ist, deren Kontur im Wesentlichen der Kontur des Zwischenbodens 14 entspricht und elastisch verformbar ausgebildet ist. Die Profildichtung 15' weist einen Durchbruch 16 auf, durch welchen ein Axialvorsprung 17 des Zwischenbodens 14 zum Bilden einer Verdrehsicherung 24 für die Profildichtung 15' hindurch ragt. Dabei ist die Höhe des Axialvorsprungs 17 derart gewählt, dass sie über die Profildichtung 15' hinaus vorsteht.
Figuren 4A und 4B zeigen eine keramische Dichtscheibe 18 des Scheibenventils 2 in zwei perspektivischen Darstellungen. Gemäß Figur 2 liegt die Dichtscheibe 18 auf dem Dichtelement 15 auf, wobei die Kontur der Dichtscheibe 18 zumindest im Wesentlichen der Kontur der Profildichtung 15' beziehungsweise des Zwischenbodens 14 entspricht.
Figur 4A zeigt eine Draufsicht auf die Dichtscheibe 18 aus Richtung des Deckels 6 gemäß Figur 2. Die Dichtscheibe 18 weist zwei Durchströmungsöffnungen 19, 20 auf, die ebenfalls jeweils ein Kreissegment darstellen, das sich über etwa 120° entsprechend den Kammern 55 und 56 erstreckt. Auf der dem Deckel 16 zugewandten Stirnseite weist die Dichtscheibe 18 außerdem eine Lageraufnahme 21 auf, die mittig in der Dichtscheibe 18 als zylinderförmige Vertiefung ausgebildet ist. Auf der gleichen Stirnseite sind außerdem die Durchströmungsöffnungen 19, 20 jeweils mit einer Anphasung 22 versehen, die zur Verbesserung der Strömungsverhältnisse dienen. Vorteilhafterweise sind derartige Anphasungen 22 auch auf der Rückseite der Dichtscheibe 18 im Bereich der Durchströmungsöffnungen 19, 20 vorgesehen, wie in Figur 4B gezeigt. Außerdem weist die Dichtscheibe 18 auf ihrer dem Deckel 16 abgewandten Stirnseite eine Aufnahmevertiefung 23 auf, deren Kontur im Wesentlichen der Kontur des Axialvorsprungs 17 entspricht und zur zumindest bereichsweisen Aufnahme des Axialvorsprungs 17 dient, um eine zumindest im Wesentlichen spielfreie Verdrehsicherung für die Dichtscheibe 18 auf dem Zwischenboden 14 zu bilden.

Figur 5 zeigt eine weitere Draufsicht auf die Dichtscheibe 18, und zwar auf die dem Deckel zugewandte Stirnseite. Dabei ist auf der Dichtscheibe 18 außerdem eine Ventilscheibe 25 angeordnet, die ebenfalls aus Keramik hergestellt ist, und deren Außendurchmesser im Wesentlichen dem Außendurchmesser der Dichtscheibe 18 entspricht. Im vorliegenden Ausführungsbeispiel ist der Außendurchmesser der Ventilscheibe 25 geringfügig kleiner ausgebildet, um einen Reibkontakt mit der Oberfläche der Innenseite des Verteilergehäuses 5 zu vermeiden, wie auch in Figur 2 gezeigt. Die Ventilscheibe 25 ist kreissegmentförmig ausgebildet und erstreckt sich über ein Kreissegment von etwa 240°. Die verbleibenden 120° der Ventilscheibe 25 sind frei und randoffen ausgebildet, um eine Durchströmungsöffnung 26 zu bilden, die bei einer Überlappungsstellung mit zumindest einer der Durchströmungsöffnungen 19, 20 der Dichtscheibe 18 einen Durchströmungsquerschnitt einstellt. Je nach Drehstellung der Ventilscheibe 25 ist somit ein gewünschter Durchströmungsquerschnitt zwischen dem Zulaufanschluss 7 und zumindest einem der Ablaufanschlüsse 8, 9 einstellbar. Die Ventilscheibe 25 liegt flächig auf der Dichtscheibe 18 auf und weist auf ihrer der Ventilscheibe 18 abgewandten Stirnseite zwei wannenförmige Aussparungen 27 auf, die beidseitig des Mittelpunkts der Ventilscheibe 25 angeordnet und spiegelsymmetrisch, jedoch nicht punktsymmetrisch ausgebildet sind, so dass eine Falschmontage des Scheibenventils 2, wie später näher erläutert, vermieden wird. Weiterhin weist die Ventilscheibe 25 mittig einen kreisförmigen Durchbruch 28 auf, der eine Verlängerung der Lageraufnahme 21 bildet und insofern ebenfalls eine kreisförmige Kontur aufweist. Auch die Ventilscheibe 25 ist an der Durchströmungsöffnung 26 mit Anphasungen 29 für ein verbessertes Durchströmungsverhalten versehen.

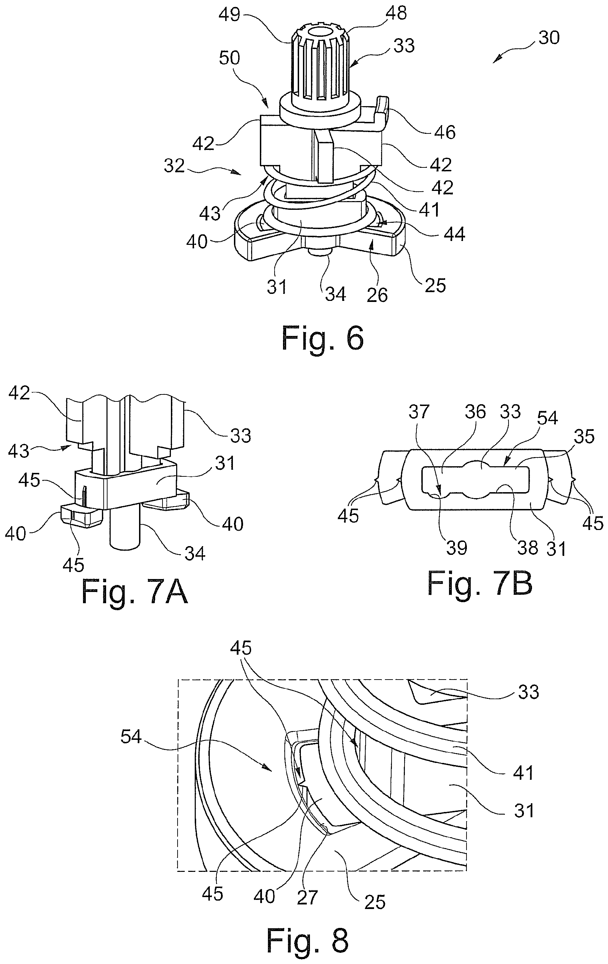

Figur 6 zeigt in einer perspektivischen Darstellung eine Vormontagebaugruppe 30, die aus der Ventilscheibe 25, einem Zwischenelement 31, einem Federelement 32 und einer Steuerwelle 33 besteht.

Die Steuerwelle 33 ragt mit einem freien Ende 34 durch den Durchbruch 28 der Ventilscheibe 25 hindurch, um wie in Figur 2 gezeigt, in die Lageraufnahme 21 einzugreifen. Dazu ist das freie Ende 34 der Steuerwelle 33 ebenfalls kreiszylinderförmig ausgebildet, wobei der Außendurchmesser des freien Endes 34 und der Innendurchmesser der Lageraufnahme 21 derart gewählt sind, dass sie zusammen eine Radialgleitlagerung für die Steuerwelle 33 bilden.

Beabstandet zu dem freien Ende 34 weist die Steuerwelle 33, wie in Figuren 7A und 7B näher dargestellt, eine asymmetrische Querschnittskontur auf. Figur 7B zeigt hierzu einen Querschnitt durch die Steuerwelle 33 im Bereich des Zwischenelementes 31. Die Steuerwelle 33 weist hierbei zwei sich gegenüberliegende radial von der Steuerwelle 33 abstehende Vorsprünge 35, 36 auf, wobei der Vorsprung 36 an einer Seitenwand einen zusätzlichen Vorsprung 37 aufweist, der im vorliegenden Ausführungsbeispiel eine gewölbte Kontur aufweist. Das Zwischenelement 31 weist eine der Kontur der Steuerwelle 33 im Bereich der Vorsprünge 36, 35 entsprechende Öffnung 38 auf. Die Öffnung 38 weist seitlich eine zusätzliche Vertiefung 39 auf, in welche der zusätzliche Vorsprung 37 einschiebbar ist. Die Steuerwelle 33 und das Zwischenelement 31 können somit nur auf eine einzige Art und Weise miteinander verbunden werden. Eine Falschmontage wird dadurch sicher verhindert.

Figur 7A zeigt eine perspektivische Darstellung der Steuerwelle 33 mit dem Zwischenelement 31. Das Zwischenelement 31 weist auf seiner der Ventilscheibe 25 zugewandten Seite zwei Stützfüße 40 auf, die vorzugsweise einstückig mit dem Zwischenelement 31 ausgebildet und in die Aussparungen 27 der Ventilscheibe 25 einbringbar sind beziehungsweise eingreifen. Aufgrund der asymmetrischen Formgebung der Aussparungen 27 und der asymmetrischen Ausbildung der Stützfüße 40 ist auch hier nur eine einzige Montageposition für Steuerwelle 33 und Ventilscheibe 25 möglich. Dadurch wird insgesamt eine zwischen Steuerwelle 33 und Ventilscheibe 25 formschlüssig wirkende Verdrehsicherung 54 gebildet.

Das Federelement 32 ist im vorliegenden Ausführungsbeispiel als Schraubenfeder 41 ausgebildet. Die Schraubenfeder 41 ist zwischen den seitlich vorstehenden Stützfüßen 40 des Zwischenelements 31 und mehreren radial vorstehenden Stützvorsprüngen 42 der Steuerwelle 33 axial gehalten. Die Stützvorsprünge 42 sind gleichmäßig über den Umfang der Steuerwelle 33 verteilt angeordnet und einstückig mit dieser ausgebildet. Vorzugsweise gehen zwei gegenüberliegende Stützvorsprünge 42 dabei in die seitlichen Vorsprünge 35 und 26 über. Die Stützvorsprünge 42 bilden zusammen einen ersten Axialanschlag 43 für die Schraubenfeder 41, während die Stützfüße 40 einen zweiten Axialanschlag für die Schraubenfeder 41 bilden. Bei der Vormontage wird die Schraubenfeder 41 auf die Steuerwelle 33 bis an den ersten Axialanschlag 43 aufgeschoben, anschließend wird das Zwischenelement 31 wie zuvor beschrieben auf die Steuerwelle 33 aufgeschoben und zuletzt die Ventilscheibe 25, so dass die Füße 40 in die Aussparungen 27 eingreifen.

Zur Arretierung der Vormontagebaugruppe 30 weist das Zwischenelement 31 mehrere elastisch verformbare Klemmrippen 45 auf, die sich parallel zur Längserstreckung des Scheibenventils 2 beziehungsweise zur Drehachse der Steuerwelle 33 stegförmig erstrecken, wie in Figur 8 dargestellt. Die Dimensionierung der Klemmrippen 45 ist dabei derart gewählt, dass ein Reibschluss zwischen Zwischenelement 31 und der Schraubenfeder 41 sowie zwischen Zwischenelement 31 und Ventilscheibe 25 aufgrund der durch die Elastizität bereitgestellten Vorspannkraft entsteht, der den Zusammenhalt der Vormontagebaugruppe 30 gewährleistet.

Weiterhin ist vorgesehen, dass die Steuerwelle 33 auf der dem Federelement 41 abgewandten Seite der Stützvorsprünge 42 einen Radialvorsprung 46 aufweist, wie in Figur 6 gezeigt. Bezüglich der Vorsprünge 35 und 36 ist der Radialvorsprung 46 in einer bestimmten, vordefinierten Relativposition an der Steuerwelle 33 angeordnet und insbesondere einstückig mit dieser ausgebildet, so das bei der Montage des Scheibenventils 2 beziehungsweise der Vormontagebaugruppe 30 eine eindeutige Relativposition von der Ventilscheibe 25 zu dem Radialvorsprung 46 besteht. Dies wird durch die jeweiligen, nur eine Montagemöglichkeit bietenden Verbindungen gewährleistet.

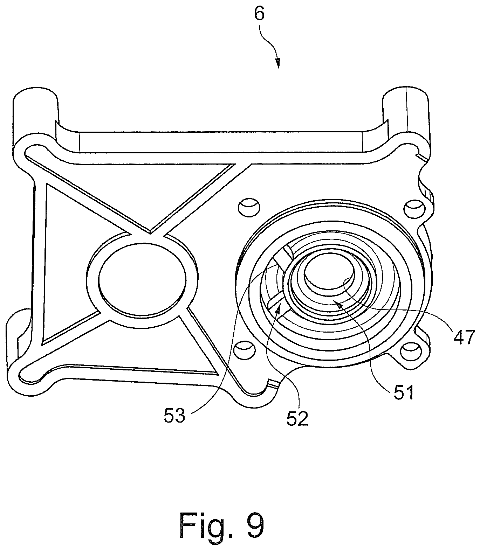

Figur 9 zeigt den Deckel 6 in einer perspektivischen Darstellung von unten beziehungsweise aus Sicht des Verteilergehäuses 5. Der Deckel 6 weist eine Lageröffnung 47 auf, durch welche das dem freien Ende 34 gegenüberliegende Ende der Steuerwelle 33 durchführbar ist. Dieses Ende ist als Koppelende 48 ausgebildet und weist dazu an seinem Außenumfang eine Außenverzahnung 49 auf, die mit dem Stellantrieb 3 koppelbar beziehungsweise in Wirkverbindung bringbar ist. Wie in Figur 2 gezeigt, bilden die Stützvorsprünge 42 auf ihrer dem ersten Axialanschlag 43 gegenüberliegenden Seite einen zweiten Axialanschlag 50, mit welchem sich die Steuerwelle 33 an der Innenseite des Deckels 6 abstützt. Zur Abdichtung ist vorteilhafterweise ein Dichtring 51 vorgesehen. Die Lageröffnung 47 sowie das Koppelende 48 der Steuerwelle 33 sind derart ausgebildet, dass die Steuerwelle 33 in der Lageröffnung 47 radial und an dem Deckel 6 axial gelagert ist.

Wie aus Figur 9 hervorgeht, weist der Deckel 6 an seiner Unterseite außerdem zwei Drehanschläge 52 und 53 auf, die von jeweils einem Axialvorsprung auf der Unterseite des Deckels gebildet werden, und, die im montierten Zustand des Scheibenventils 2 im Bewegungsweg des Radialvorsprungs 46 liegen. Wird die Steuerwelle 33 mittels des Stellantriebs 3 betätigt, so lässt sie sich nur zwischen den zwei durch Drehanschläge 42 und 43 definierten Positionen verdrehen, bis jeweils der Radialvorsprung 46 gegen einen der Drehanschläge 52 oder 53 stößt. Natürlich können die Drehaufschläge 52 und 53 auch von einem einzigen, entsprechend breiten beziehungsweise geformten Vorsprung des Deckels 6 gebildet werden.

Der Deckel 6 sowie das Verteilergehäuse 5 sind derart ausgebildet, dass sie nur in einer bestimmten Relativposition zueinander miteinander verbunden werden können, so dass der Deckel 6 eine eindeutige Ausrichtung auf dem Verteilergehäuse 5 erfährt. Dadurch liegen die Drehanschläge 53 und 52 auf bekannten Positionen bezüglich der Kammern 55, 56 beziehungsweise bezüglich der Durchströmungsöffnungen 19 und 20. Durch die drehfeste Verbindung der Ventilscheibe 25 mit der Steuerwelle 33 sowie die gehäusefeste Lage der Dichtscheibe 18, und die bekannte Anordnung des Radialvorsprungs sowie der Drehanschläge 52, 53, kann somit bei der Montage mittels des Stellantriebs das Scheibenventil 2 in eine eindeutige Ausgangsstellung verbracht werden, ohne dass dies anhand eines tatsächlich eingestellten Volumenstroms durch das Scheibenventil 2 hindurch verifiziert werden müsste.

Bei der Montage wird zunächst die Vormontagebaugruppe 30 gemäß Figur 6 zusammengesetzt. Anschließend wird die Vormontagebaugruppe in das Verteilergehäuse 5, in welchem bereits die Profildichtung 15' sowie die Dichtscheibe 18 angeordnet und gemäß des Axialvorsprungs 17 ausgerichtet sind, eingeführt, so dass das freie Ende 34 der Steuerwelle 33 in die Lageraufnahme 21 eingreift, wie in Figur 2 gezeigt. Anschließend wird der Deckel 6 mit der Lageröffnung 47 auf das Koppelende 48 der Steuerwelle 33 aufgeschoben und die Steuerwelle 33 aufgrund des ersten Axialanschlags 43 gegen die Schraubenfeder 41 verspannt, so dass die Ventilscheibe 25 gegen die Dichtscheibe 18 federbeaufschlagt gedrängt wird, so dass die Ventilscheibe 25 und die Dichtscheibe 18 dicht aneinander anliegen und ein ungewolltes Durchströmen des Scheibenventils 2 sicher verhindert wird. Der Deckel 6 kann beispielsweise mit dem Verteilergehäuse 5, wie, wie in Figur 1 dargestellt, verschraubt werden, um eine dauerhafte Verbindung des Gehäuses 4 zu gewährleisten. Dadurch, dass die Drehanschläge 52, 53 und der Radialvorsprung 46 innerhalb des Gehäuses 4 angeordnet sind, sind sie sicher vor äußeren Einflüssen geschützt und insofern weniger schmutzanfällig. Ventilscheibe 25 und Dichtscheibe 18 trennen oder verbinden, je nach Drehstellung der Ventilscheibe 25, die Kammern 55 und 56 von einer dem Zulaufanschluss 7 zugeordneten Kammer 57, die von dem Verteilergehäuse 5, dem Deckel 6 und der Ventilscheibe 25 und Dichtscheibe 18 begrenzt wird.

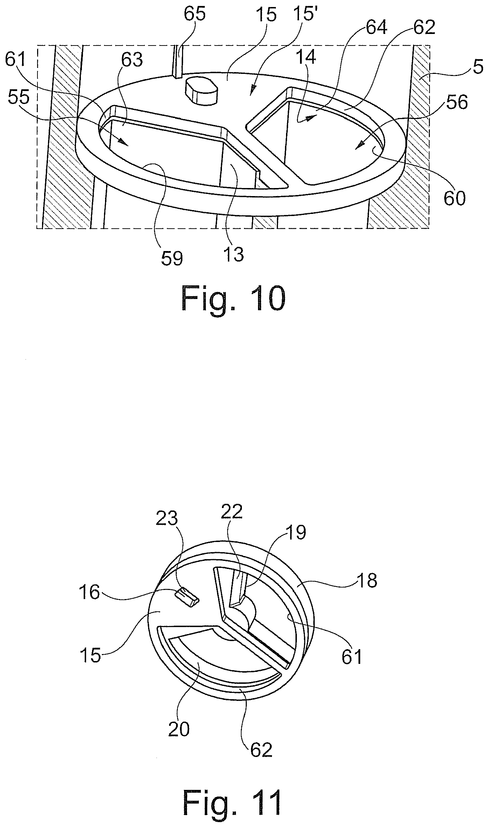

Zurückkommend auf Figur 3 soll mithilfe von Figur 10 die Profildichtung 15 näher erläutert werden. Figur 10 zeigt hierzu eine Schnittdarstellung des Scheibenventils 2 gemäß der Linie A-A aus Figur 3, wobei die Profildichtung 15 selbst nicht geschnitten dargestellt ist.

Wie mit Bezug auf Figuren 2 und 3 bereits erläutert, liegt die Profildichtung 15 auf dem Zwischenboden 14 des Gehäuses 4 beziehungsweise des Verteilergehäuses 5 flächig auf, wobei der Zwischenboden 14 von der freien Stirnseite der Trennwand 13 gebildet wird. Die Kontur des Zwischenboden 14 entspricht im Wesentlichen der Kontur der Profildichtung 15' beziehungsweise des Dichtelements 15. Aufgrund der zuvor beschriebenen Ausbildung des Verteilergehäuses 5 mittels der Trennwand 13 bilden die Kammern 55, 56 an ihrem der Profildichtung 15' zugewandten Ende jeweils Durchströmungsöffnungen 59 beziehungsweise 60, die mit den Durchströmungsöffnungen 19, 20 der Dichtscheibe 18 korrespondieren. Das Dichtelement 15 weist aufgrund der zuvor beschriebenen, der Kontur des Zwischenbodens 14 entsprechenden Ausbildung ebenfalls zwei Durchströmungsöffnungen 61, 62 auf, die jeweils mit den Durchströmungsöffnungen 59 beziehungsweise 60 fluchten. Der Zwischenboden 14 ist im Bereich der Durchströmungsöffnungen 61, 62 etwas breiter ausgebildet als die Profildichtung 15', sodass die Durchströmungsöffnungen 59, 60 einen geringfügig kleineren Querschnitt aufweisen als die Durchströmungsöffnungen 61, 62. In diesem Bereich weist der Zwischenboden 14 an jeder der Durchströmungsöffnungen 59, 60 einen Haltevorsprung 63 beziehungsweise 64 auf, der als Haltesteg ausgebildet ist und sich über den gesamten Umfang der jeweiligen Durchströmungsöffnung 61, 62 beziehungsweise 59, 60 erstreckt. Die Ausbildung des Zwischenbodens 14 und des Dichtelements 15 ist derart gewählt, dass das Dichtelement 15 zwischen der seitlichen Gehäusewand des Verteilergehäuses 5 und den Haltevorsprüngen 63, 64 verspannt gehalten sind. Die Haltevorsprünge 63, 64 weisen dabei eine Höhe auf, die kleiner ist als die Höhe des Dichtelements 15, sodass dieses - axial gesehen - bereichsweise in der durch Gehäuseaußenwand und Haltevorsprünge 63, 64 gebildeten Nut einliegt. Da die Kontur der Haltevorsprünge 63, 64 beziehungsweise der Haltestege der Kontur der Durchströmungsöffnungen 61, 62 des Dichtelements 15 entsprechen, dienen sie ebenfalls der Verdrehsicherung des Dichtelements 15 und gewährleisten, dass das elastisch verformbare Dichtelement 15 im Betrieb nicht derart verformt wird, dass es bereichsweise die Durchströmungsöffnungen 59, 60 überdeckt, wodurch der jeweils freigebbare Durchströmungsquerschnitt entsprechend verringert werden würde.

Wie aus Figur 11 ersichtlich, die eine perspektivische Unteransicht auf die Montageanordnung von Dichtelement 15 und Dichtscheibe 18 zeigt, sind die Durchströmungsöffnungen 61, 62 des Dichtelements 15 etwas größer ausgebildet als die Durchströmungsöffnungen 19, 20 der Dichtscheibe 18, sodass das Dichtelement 15 vollständig flächig an der Unterseite der Dichtscheibe 18 aufliegt. Die Durchströmungswerte werden durch das Dichtelement 15 dadurch nicht oder kaum beeinflusst. Durch das Vorsehen der Mittel zur Verdrehsicherung der Profildichtung 15' beziehungsweise Dichtelements 15 im inneren Bereich, wird am Außenumfang ein kreisringförmiger Dichtabschnitt gebildet, der sich über den gesamten Umfang erstreckt und mit der Dichtscheibe 18 und dem Zwischenboden 14 entsprechend zusammenwirkt.

Zur axialen Sicherung des Dichtelements 15 auf dem Zwischenboden 14, insbesondere zur Vormontagezwecken, sind an der Gehäusewand des Verteilergehäuses 5 vorzugsweise ein oder mehrere Rastnasen 65 ausgebildet, die zu einer radialen Verformung des Dichtelements 15 beim Einlegen auf den Zwischenboden 14 führen, wobei im eingelegten Zustand ein Hintergriffsitz mit den Rastnasen 65 gebildet wird, der ein selbstständiges Lösen des Dichtelements 15 aus dem Verteilergehäuse 5 heraus verhindert. Gemäß dem vorliegenden Ausführungsbeispiel, wie auch aus Figur 3 ersichtlich, sind drei gleichmäßig über den Umfang verteilt angeordnete Rastnasen 65 vorgesehen. Die Rastnasen 65 dienen gleichzeitig bevorzugt auch als Klemmrippen für die Dichtscheibe 18 zur weiteren Verdrehsicherung der Dichtscheibe 18.

Insgesamt wird somit ein Scheibenventil 2 geboten, das aufgrund der vorteilhaften Verdrehsicherung größtmögliche Durchströmungsquerschnitte zulässt und ein Verdrehen insbesondere des Dichtelements 15 sicher und kostengünstig verhindert.

## Patentansprüche

1. Scheibenventil (2), insbesondere Mehrwege-Regulierventil, mit einem Gehäuse (4), das als Anschlüsse (7,8,9) für ein flüssiges und/oder gasförmiges Medium zumindest einen Zulaufanschluss (7) und zumindest einen Ablaufanschluss (8,9) aufweist, mit mindestens einer verdrehbar gelagerten Ventilscheibe (25), insbesondere Keramikventilscheibe, die mit wenigstens einer ersten Durchströmungsöffnung (26) versehen und drehbar gelagert in dem Gehäuse (4) angeordnet ist, um in Abhängigkeit ihrer Drehstellung die Anschlüsse (7,8,9) fluidtechnisch miteinander zu verbinden und voneinander zu trennen, wobei die Ventilscheibe (25) auf einer drehfest angeordneten und mindestens zwei zweite Durchströmungsöffnungen (19,20) aufweisenden Dichtscheibe (18) flächig aufliegt, und mit einem zwischen der Dichtscheibe (18) und einem Zwischenboden (14) des Gehäuses (4) angeordneten und elastisch verformbaren Dichtelement (15), wobei das Dichtelement (15) scheibenförmig ausgebildet ist und mit den zweiten Durchströmungsöffnungen (19,20) fluchtende dritte Durchgangsöffnungen (61,62) aufweist, **dadurch gekennzeichnet, dass** der Zwischenboden (14) zur formschlüssigen Verdrehsicherung des Dichtelements (15) wenigstens einen in eine der dritten Durchströmungsöffnungen (61,62) eingreifenden Haltevorsprung (63,64) aufweist, und dass desweiteren mindestens rein auf dem Zwischenboden (14) außermittig in einem durchströmungsöffnungsfreien Bereich angeordneter Axialvorsprung (17) vorgesehen ist, der einen Durchbruch (16) des Dichtelements (15) zumindest im Wesentlichen formschlüssig durchgreift und bereichsweise in einer Aufnahmevertiefung (23) der Dichtscheibe (18) zu deren Verdrehsicherung einliegt.

2. Scheibenventil nach Anspruch 1, **dadurch gekennzeichnet, dass** in jede der dritten Durchströmungsöffnungen (61,62) mindestens ein Haltevorsprung (63,64) eingreift.

3. Scheibenventil nach einem der vorhergehenden Ansprüche, **dadurch gekennzeichnet, dass** sich der jeweilige Haltevorsprung (63,64) als Haltesteg über den gesamten Innenumfang der jeweiligen dritten Durchströmungsöffnung (61,62) erstreckt.

4. Scheibenventil nach einem der vorhergehenden Ansprüche, **dadurch gekennzeichnet, dass** die zweiten und/oder dritten Durchströmungsöffnungen (19,20;61,62) zumindest im Wesentlichen kreissegmentförmig ausgebildet sind.

5. Scheibenventil nach einem der vorhergehenden Ansprüche, **dadurch gekennzeichnet, dass** die Dichtscheibe (18) zwei der zweiten Durchströmungsöffnungen (19,20) aufweist, die sich insbesondere jeweils über mindestens ein Drittel der Dichtscheibe (18) erstrecken.

6. Scheibenventil nach einem der vorhergehenden Ansprüche, **dadurch gekennzeichnet, dass** die Kontur des Dichtelements (15) der Kontur der Dichtscheibe (18) zumindest im Wesentlichen entspricht.

7. Scheibenventil nach einem der vorhergehenden Ansprüche, **dadurch gekennzeichnet, dass** die Außenkontur der Dichtscheibe (18), des Dichtelements (15) und des Zwischenbodens (14) jeweils kreisförmig ausgebildet ist.

8. Scheibenventil nach einem der vorhergehenden Ansprüche, **dadurch gekennzeichnet, dass** der Zwischenboden (14) mit den zweiten und dritten Durchströmungsöffnungen (19,20;61,62) fluchtende vierte Durchströmungsöffnungen (59,60) aufweist, die jeweils nur einem der Anschlüsse (8,9) zugeordnet sind.

9. Scheibenventil nach einem der vorhergehenden Ansprüche, **gekennzeichnet durch** mindestens eine das Gehäuse (4) in zumindest zwei Kammern (55,56) trennende Trennwand (13), die an ihrer freien Stirnseite den Zwischenboden (14) bildet oder mitbildet.

10. Scheibenventil nach einem der vorhergehenden Ansprüche, **dadurch gekennzeichnet, dass** zumindest ein Abschnitt des Zwischenbodens (14) durch eine Stufe (58) an einer Gehäusewand des Gehäuses (4) gebildet wird.

11. Scheibenventil nach einem der vorhergehenden Ansprüche, **dadurch gekennzeichnet, dass** das Dichtelement (15) aus einem Elastomer, insbesondere aus einem terpolymeren Elastomer gefertigt ist.

12. Scheibenventil nach einem der vorhergehenden Ansprüche, **dadurch gekennzeichnet, dass** eine Steuerwelle (33) drehfest mit der Ventilscheibe (25) verbunden ist und mindestens einen radial vorstehenden Stützvorsprung (42) axial beabstandet zu der Ventilscheibe (25) aufweist, wobei zwischen dem Stützvorsprung (42) und der Ventilscheibe (25) wenigstens ein Federelement (32) vorgespannt/vorspannbar gehalten ist.

## Claims

1. A disc valve (2), in particular a multiway control valve, having a housing (4) that has at least one inlet connection (7) and at least one outlet connection (8, 9) as connections (7, 8, 9) for a liquid and/or gaseous medium, at least one rotatably mounted valve disc (25), in particular a ceramic valve disc, which is provided with at least one first through-flow opening (26) and is arranged rotatably mounted in the housing (4), in order to fluidically connect and disconnect the connections (7, 8, 9) depending on its rotational position, wherein the valve disc (25) rests flatly on at least one sealing disc (18), which is arranged in a torque-proof manner and has at least two second through-flow openings (19, 20), and a sealing element (15), which is arranged between the sealing disc (18) and an intermediate floor (14) of the housing (4) and is elastically deformable, wherein the sealing element (15) is configured in disc shape and has third through-flow openings (61, 62) that are aligned with the second through-flow openings (19, 20), **characterized in that** the intermediate floor (14) has at least one retaining projection (63, 64) that engages in one of the third through-flow openings (61, 62) for positively locking anti-twist protection of the sealing element (15), and that further at least one axial projection (17) is provided that is arranged off-center in a region, which is free of through-flow openings, on the intermediate floor (14), and that engages through a breakthrough (16) of the sealing element (15) at least fundamentally in a positively locking manner and is inserted at least in some areas into a receiving recess (23) of the sealing disc (18) for its anti-twist protection.

2. The disc valve according to claim 1, **characterized in that** at least one retaining projection (63, 64) engages in each of the third through-flow openings (61, 62).

3. The disc valve according to one of the preceding claims, **characterized in that** each retaining projection (63, 64) extends as a retaining bar over the entire inner periphery of the respective third through-flow opening (61, 62).

4. The disc valve according to one of the preceding claims, **characterized in that** the second and/or third through-flow openings (19, 20; 61, 62) are configured at least fundamentally in the shape of a segment of a circle.

5. The disc valve according to one of the preceding claims, **characterized in that** the sealing disc (18) has two of the second through-flow openings (19, 20), which respectively extend in particular over at least one third of the sealing disc (18).

6. The disc valve according to one of the preceding claims, **characterized in that** the contour of the sealing element (15) at least fundamentally corresponds to the contour of the sealing disc (18).

7. The disc valve according to one of the preceding claims, **characterized in that** the outer contour of the sealing disc (18), of the sealing element (15) and of the intermediate floor (14) are respectively configured in a circular shape.

8. The disc valve according to one of the preceding claims, **characterized in that** the intermediate floor (14) has fourth through-flow openings (59, 60) that are aligned with the second and third through-flow openings (19, 20; 61, 62) and are respectively allocated to only one of the connections (8, 9).

9. The disc valve according to one of the preceding claims, **characterized by** at least one partition wall (13), which partitions the housing (4) into at least two chambers (55, 56) and forms or contributes to forming the intermediate floor (14) on its free face side.

10. The disc valve according to one of the preceding claims, **characterized in that** at least one section of the intermediate floor (14) is formed by a step (58) on a housing wall of the housing (4).

11. The disc valve according to one of the preceding claims, **characterized in that** the sealing element (15) is made from an elastomer, in particular from a terpolymer elastomer.

12. The disc valve according to one of the preceding claims, **characterized in that** a control shaft (33) is connected in a torque-proof manner to the valve disc (25) and has at least one radially projecting supporting projection (42) at an axial distance from the valve disc (25), wherein at least one spring element (32) is supported in a preloaded/preloadable state between the supporting projection (42) and the valve disc (25).

## Revendications

1. Soupape en disque (2), en particulier soupape de régulation à plusieurs voies, comportant un boîtier (4), qui présente, pour servir de raccordements (7, 8, 9) à un milieu liquide et/ou gazeux, au moins un raccordement d'alimentation (7) et au moins un raccordement d'évacuation (8, 9), comportant au moins un disque de soupape (25) monté rotatif, en particulier un disque de soupape en céramique, qui est monté rotatif, est muni d'au moins une première ouverture d'écoulement (26) et est agencé en rotation dans le boîtier (4) pour relier techniquement de manière fluidique les raccordements (7, 8, 9) les uns aux autres et les séparer les uns des autres en fonction de leur position de rotation, le disque de soupape (25) reposant à plat sur un disque d'étanchéité (18) disposé de manière immobile en rotation et présentant au moins deux deuxièmes ouvertures d'écoulement (19, 20), et avec un élément d'étanchéité (15) qui est disposé entre le disque d'étanchéité (18) et un fond intermédiaire (14) du boîtier (4) et est déformable élastiquement, dans lequel l'élément d'étanchéité (15) est configuré en forme de disque et présente des troisièmes ouvertures de passage (61, 62) alignées avec les deuxièmes ouvertures d'écoulement (19, 20), **caractérisée en ce que** le fond intermédiaire (14) présente, pour assurer l'immobilisation en rotation de l'élément d'étanchéité (15) par complémentarité de forme, au moins un épaulement de maintien(63, 64) qui s'engage dans une des troisièmes ouvertures d'écoulement (61, 62), et **en ce qu'**en outre au moins un épaulement axial (17) est prévu sur le fond intermédiaire (14) et est disposé à l'extérieur du centre dans une zone sans ouverture d'écoulement, lequel traverse au moins essentiellement par complémentarité de forme un claquage (16) de l'élément d'étanchéité (15) et se trouve par endroits dans une cavité de réception (23) du disque d'étanchéité (18) pour assurer l'immobilisation en rotation de celui-ci.

2. Soupape en disque selon la revendication 1, **caractérisée en ce qu'**au moins un épaulement de maintien (63, 64) vient s'engager dans chacune des troisièmes ouvertures d'écoulement (61, 62).

3. Soupape en disque selon une des revendications précédentes, **caractérisée en ce que** l'épaulement de maintien (63, 64) respectif s'étend sous forme de traverse de retenue sur toute la circonférence intérieure de la troisième ouverture d'écoulement (61, 62) respective.

4. Soupape en disque selon une des revendications précédentes, **caractérisée en ce que** les deuxièmes et/ou troisièmes ouvertures d'écoulement (19, 20 ; 61, 62) sont configurées au moins essentiellement sous forme de segments circulaires.

5. Soupape en disque selon une des revendications précédentes, **caractérisée en ce que** le disque d'étanchéité (18) présente deux des deuxièmes ouvertures d'écoulement(19, 20) qui s'étendent en particulier respectivement sur au moins un tiers du disque d'étanchéité (18).

6. Soupape en disque selon une des revendications précédentes, **caractérisée en ce que** le contour de l'élément d'étanchéité (15) correspond au moins essentiellement au contour du disque d'étanchéité (18).

7. Soupape en disque selon une des revendications précédentes, **caractérisée en ce que** le contour extérieur du disque d'étanchéité (18), de l'élément d'étanchéité (15) et du fond intermédiaire (14) est respectivement configuré sous forme circulaire.

8. Soupape en disque selon une des revendications précédentes, **caractérisée en ce que** le fond intermédiaire (14) présente des quatrièmes ouvertures d'écoulement (59, 60) qui sont alignées avec les deuxièmes et troisièmes ouvertures d'écoulement (19, 20 ; 61, 62) et sont respectivement associées uniquement à un des raccordements (8, 9).

9. Soupape en disque selon une des revendications précédentes, **caractérisée par** au moins une cloison de séparation (13) qui sépare le boîtier (4) en au moins deux chambres (55, 56) et qui forme le fond intermédiaire (14) sur sa face frontale libre ou avec celle-ci.

10. Soupape en disque selon une des revendications précédentes, **caractérisée en ce qu'**au moins un segment du fond intermédiaire (14) est formé par un cran (58) sur une cloison du boîtier du boîtier (4).

11. Soupape en disque selon une des revendications précédentes, **caractérisée en ce que** l'élément d'étanchéité (15) est fabriqué à partir d'un élastomère, en particulière à partir d'un élastomère terpolymère.

12. Soupape en disque selon une des revendications précédentes, **caractérisée en ce qu'**un arbre de commande (33) est relié au disque de soupape (25) de manière immobile en rotation et présente au moins un épaulement d'appui (42) dépassant radialement à distance axiale du disque de soupape (25) et dans laquelle, entre l'épaulement d'appui (42) et le disque de soupape (25), au moins un élément de ressort (32) est maintenu /précontraint de manière à pouvoir être précontraint.
